# EUROPEAN PATENT APPLICATION

(11) **EP 2 933 998 A1**
(43) Date of publication of application: **21.10.2015**
(21) Application number: 13869429.4
(22) Date of filing: 22.12.2013
(51) Int. Cl.: H04N 5/232

(54) **PICK-UP DEVICE AND PICK-UP METHOD**

(30) Priority: 28.12.2012 CN 201210587006; 08.11.2013 CN 201310557312
(71) Applicant: Nubia Technology Co., Ltd., Shenzhen, Guangdong 518000 (CN)
(72) Inventor: ZHAO, Yunze, Shenzhen Guangdong 518000 (CN); JING, Hongliang, Shenzhen Guangdong 518000 (CN); CUI, Xiaohui, Shenzhen Guangdong 518000 (CN); SHEN, Shian, Shenzhen Guangdong 518000 (CN); LI, Qiang, Beijing 100000 (CN)
(74) Representative: Gevers Patents
(86) International application number: PCT/CN2013/090176
(87) International publication number: WO 2014/101722

(57) **Abstract**

The present disclosure provides a photographic apparatus and a photographing method. The photographic apparatus includes a display module configured to display an image, a receiving module configured to receive a command indicating an operation on the image displayed on the display module, and a processing module configured to select a metering position and/or a focusing position according to the command received by the receiving module. The present disclosure allows the user to select the focus area and the metering area to compose images according to different scenes, thereby improving the user experience. Furthermore, the user can respectively drag the focusing frame or the metering frame during the view-finding process, improving the playability and the user experience.

## Description

### TECHNICAL FIELD

The present disclosure relates to photographic technology and, particularly, to a photographic apparatus and a photographing method.

### BACKGROUND

For existing hand-held devices, such as mobile phones and digital cameras, when a user performs a manual focus operation on a preview viewfinder interface, a focal distance of the touch point and light information are simultaneously measured. That is, when the user touches the screen to perform the manual focus operation, the metering value of the viewfinder interface is simultaneously changed.

In most cases, such way of performing focus operations and metering operations cannot meet users' requirements. For example, when the user captures an image outdoors in a backlit situation, the light from background is relatively strong. Because the focus point and the metering point are at a single point, the image captured is relatively dark.

### SUMMARY

Therefore, the technical problem to be solved by the present disclosure is to provide a photographic apparatus and a photographing method to resolve the problems of the existing technology, e.g., unable to have independent focusing point and metering point, and inconvenient for a user to find a view and capture an image based on amount of the backlit in different environments. That is, to provide a view finding solution to separate the focusing point and the metering point and to separately set the focusing value and the metering value, and also to provide a corresponding photographic apparatus and photographing method.

The technical solution implemented for solving the above technical problems includes the followings.

A photographic apparatus includes a display module configured to display an image; a receiving module configured to receive a command indicating an operation on the image displayed on the display module; and a processing module configured to select a metering position and/or a focusing position according to the command received by the receiving module.

A photographing method includes displaying an image; receiving a command indicating an operation on the displayed image; and selecting a metering position and/or a focusing position according to the received command.

According to the embodiments of the present disclosure, when a user uses the photographic apparatus to preview a composed image, the user can select the focus area and the metering area as needed to compose images according to different scenes, thereby improving the user experience.

### DESCRIPTION OF THE DRAWINGS

FIG. 1 is a block diagram of a photographic apparatus in accordance with a first embodiment of the present disclosure;
FIG. 2 is a schematic view of a screen of a display module in accordance with embodiments of the present disclosure;
FIG. 3 is a flow chart of a photographing method in accordance with embodiments of the present disclosure; and
FIG. 4 is a flow chart of the photographing method based on an Android mobile phone in accordance with embodiments of the present disclosure.

### DETAILED DESCRIPTION

Details of the present invention are further illustrated together with the accompanying drawings and the disclosed embodiments. It should be understood that the embodiments described herein are only used to explain the present disclosure rather than to limit the present disclosure.

### Embodiment One

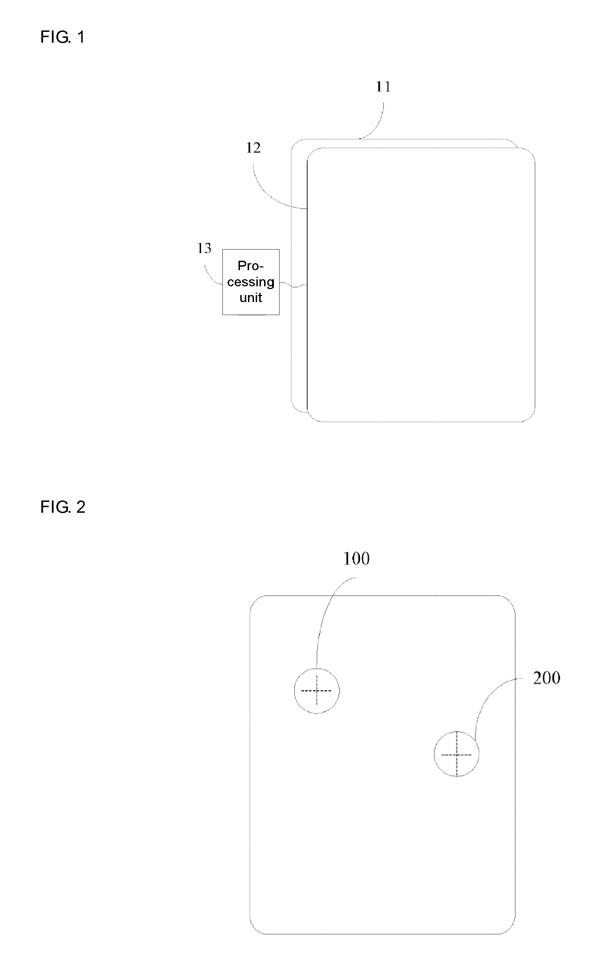

Referring to FIG. 1, which is a block diagram of a photographic apparatus in accordance with the first embodiment of the present disclosure, the photographic apparatus includes a display module 11, a receiving module 12, and a processing module 13.

The display module 11 is configured to display an image which can be an image captured by a camera, an image received by the camera, or an image stored in the photographic apparatus. The display module 11 is further configured to display a metering pattern and/ or a focusing pattern. The camera is connected with the display module 11, and the camera may be disposed on the outer side of the photographic apparatus. The camera can be a front camera, a rear camera, or an independent camera, and may be connected with the display module 11 through a data bus. The display module 11 can be a liquid crystal display (LCD) or an organic light emitting display (OLED).

The receiving module 12 is configured to receive a command indicating an operation on the image displayed on the display module 12. The command may be a gesture-operation command, an audio-control or sound command, or a touch-input command. The command may include: a command for dragging or clicking the displayed metering pattern to select the metering position; and/or a command for dragging or clicking the focusing pattern to select the focusing position. The receiving module 12 can be a mouse, a keyboard, a microphone, a touch pad, a projecting device, or any combination thereof.

The processing module 13 is configured to select the metering position and/or the focusing position according to the command received by the receiving module 12. Preferably, the processing module 13 includes a calculating unit. The calculating unit can be configured to use a brightness value of pixel(s) covered by the metering pattern of at least one selected metering position as an input value, and to perform calculation according to a preset function to generate an output value. The photographic apparatus captures images based on the output value.

As an example, as shown in FIG. 2, the touch-input command is to use fingers on the screen of the display module 11 displaying the image to perform touch-control. The user can select the metering position by, for example, dragging the metering pattern 100 using a finger, observe the change of the amount of exposure, and select the metering point as needed. The user can also select the focusing position by, for example, dragging the focusing pattern 200 to an area requiring focusing using a finger to perform a focus operation.

Preferably, there are at least two metering positions; and/or there are at least two focusing positions.

Preferably, the color of the metering pattern is different from that of the focusing pattern, or the shape of the metering pattern is different from that of the focusing pattern.

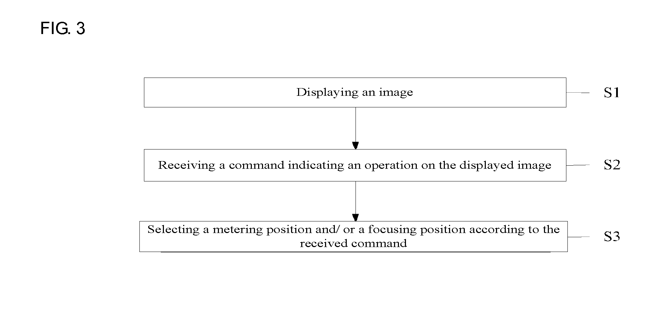

Referring to FIG. 3, which is a flow chart of a photographing method in accordance with the present disclosure, the photographing method includes following steps.

Step S1, displaying an image.

The image can be an image captured by a camera, an image received by the camera, or an image stored in the photographic apparatus. The image may also include a metering pattern and/or a focusing pattern.

Step S2, receiving a command indicating an operation on the displayed image.

The command includes: a command for selecting a metering position and/or a command for selecting a focusing position.

Step S3, selecting a metering position and/or the focusing position according to the received command.

Specifically, the metering position is selected according to the received command for selecting the metering position; and the focusing position is selected according to the received command for selecting the focusing position.

The step of selecting the metering position and/or the focusing position further includes: dragging or clicking the displayed metering pattern to select the metering position; and/or dragging or clicking the displayed focusing pattern to select the focusing position.

In certain embodiments, there are at least two metering positions and/or at least two focusing positions.

In certain embodiments, the color of the metering pattern is different from that of the focusing pattern; or the shape of the metering pattern is different from that of the focusing pattern. Thus, it is easy to distinguish the metering pattern from the focusing pattern, facilitating the user to operate the photographic apparatus.

Preferably, a brightness value of pixel(s) covered by the metering pattern of at least one selected metering position is set as an input value, and calculation is performed through a preset function to obtain an output value. An image can be captured according to the output value.

Preferably, when there are at least two focusing positions, and images corresponding to these focusing positions are distributed at far and near distances from the photographic apparatus, the photographic apparatus adjusts focus parameters according to different focusing positions to capture the image, thereby optimizing the sharpness of the captured image.

### Embodiment Two

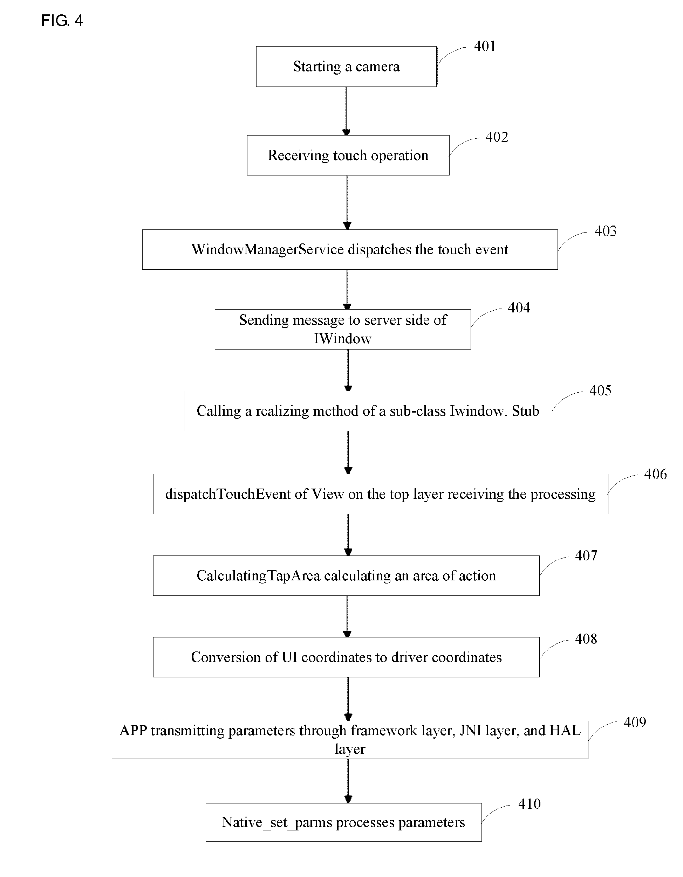

Referring FIG. 4, a mobile phone having an Android platform is used for illustrative purposes.

The mobile phone uses dispatchTouchEvent of the Andriod system to dispatch and process the touch event. The mobile phone compares the coordinates of the touch-control area with the positions of the focusing frame and the metering frame to determine whether the dragging or clicking event is an operation for focusing or for metering. After the determination, the method of calculateTapArea (calculating a coordinate area, i.e., calculating a rectangular area using the touch point as the center point) is used to perform coordinate conversion to convert the screen coordinates of the UI into driver coordinates which can be used by the bottom layer of the system. The Qualcomm interface setMeteringArea (setting a metering area, an interface configured to transmit the metering area to the bottom layer) is used to set the metering area, and the parameter data is transmitted to the HAL layer through JNI and is eventually received by the bottom layer. According to the present disclosure, the method for separating the focus point and the metering point to perform view-finding can include three modules as follows.
(1) Obtaining the touch event on the focus area and the metering area and determine the area. First, WindowManagerService (the window manager service, the service for managing the view in the window in the Android framework) dispatches the touch event to the current top activity. The function dispatchPointer (dispatch pointer, the method for sending messages in the WindowManagerService) in the WindowManagerService sends the message to the corresponding IWindow server side through an IWindow client side proxy, that is, an IWindow.Stub sub-class. Second, after receiving the message, the implemented method dispatchPointer of the IWindow.Stub sub-class is called. Third, after the message is transmitted to the View on the top layer, the method dispatchTouchEvent of the View is called, thereby finishing the obtaining of the touch event. By comparing the currently obtained coordinates of the touch on screen with the previous coordinates of the focus area and the metering area, it can be determined whether the area currently being dragged or clicked is a valid focus area, a valid metering area, or an invalid area.
(2) Calculating the coordinates of the valid area and converting UI coordinates to driver coordinates.
   After the focus area and the metering area are calculated through the calculateTapArea according to the current touch point, mapRect in Matrix and prepareMatrix (prepare coordinate conversion, a type of tool at Android App layer configured to convert upper layer coordinates to bottom layer driver coordinates) in Util tool convert the upper layer coordinates to the bottom layer driver coordinates.
(3) Transmitting the parameters and call a bottom layer interface.

After determining and calculating the corresponding areas, the parameters are transmitted to the JNI (Java Native Interface, a Java local call for performing the call from the upper layer Java language to the bottom layer C language) through setMeteringArea and setFocusArea (set focus area, an interface configured to transmit the focus area to the bottom layer) of the framework layer. The parameters are further transmitted to the HAL layer through android_hardware_Camera (a function in the JNI layer configured to process the call from Java language to C language in the camera module), finally completed by native_set_parms.

The above embodiment is illustrated based on the Android platform. However, the embodiments of the present disclosure are not limited to the Android platform, and can be implemented on other platforms or operation systems including Apple's iOS or Microsoft's Windows.

According to the embodiments of the present disclosure, when a user uses the photographic apparatus to preview a composed image, the user can select the focus area and the metering area as needed to compose images according to different scenes, thereby improving the user experience.

Certain preferred embodiments are described above together with accompanying drawings, without limiting the protection scope of the present invention. Those skilled in the art can, without departing the scope and principles of the present disclosure, obtain various modified embodiments, such as applying features of one embodiment to another embodiment to derive yet another embodiment. Any modifications, improvements, or equivalents to the disclosed embodiments should be within the scope of the present invention.

## Claims

1. A photographic apparatus, comprising:
a display module configured to display an image;
a receiving module configured to receive a command indicating an operation on the image displayed on the display module; and
a processing module configured to select a metering position and/or a focusing position according to the command received by the receiving module.

2. The photographic apparatus of claim 1, wherein the display module is further configured to display a metering pattern and/or a focusing pattern.

3. The photographic apparatus of claim 2, wherein the command includes:
a command for dragging or clicking the displayed metering pattern to select the metering position; and/or,
a command for dragging or clicking the displayed focusing pattern to select the focusing position.

4. The photographic apparatus of claim 2, wherein:
the processing module comprises a calculating unit;
the calculating unit is configured to set a brightness value of pixels covered by the metering pattern of at least one selected metering position as an input value, and to perform calculation through a preset function to obtain an output value; and
the photographic apparatus captures the image based on the output value.

5. A photographing method, comprising:
displaying an image;
receiving a command indicating an operation on the displayed image; and
selecting a metering position and/or a focusing position according to the received command.

6. The photographing method of claim 5, wherein:
the command includes a command for selecting the metering position and/or a command for selecting the focusing operation; and
the step of selecting a metering position and/or a focusing position according to the received command further comprises:
selecting the metering position according to the received command for selecting the metering position; and
selecting the focusing position according to the received command for selecting the focusing position.

7. The photographing method of claim 5, wherein the number of the metering position is at least two, and/or the number of the focusing position is at least two.

8. The photographing method of claim 5, wherein the step of selecting a metering position and/ or a focusing position comprises:
dragging or clicking a displayed metering pattern to select the metering position; and/ or
dragging or clicking a displayed focusing pattern to select the focusing position.

9. The photographing method of claim 8, wherein a color of the metering pattern is different from that of the focusing pattern; or a shape of the metering pattern is different from that of the focusing pattern.

10. The photographing method of claim 8, further comprising:
setting a brightness value of pixels covered by the metering pattern of at least one selected metering position as an input value,
performing calculation through a preset function to obtain an output value; and
capturing the image based on the output value.

## Amended claims

### Amended claims under Art. 19.1 PCT

1. A photographic apparatus, **characterized in that**, the photographic apparatus comprising:
a display module (11) configured to display an image;
a receiving module (12) configured to receive a command indicating an operation on the image displayed on the display module (11); and
a processing module (13) configured to select a metering position and/or a focusing position according to the command received by the receiving module (12).

2. The photographic apparatus of claim 1, wherein the display module (11) is further configured to display a metering pattern (100) and/or a focusing pattern (200).

3. The photographic apparatus of claim 2, wherein the command includes:
a command for dragging or clicking the displayed metering pattern (100) to select the metering position; and/or,
a command for dragging or clicking the displayed focusing pattern (200) to select the focusing position.

4. The photographic apparatus of claim 2, wherein:
the processing module (13) comprises a calculating unit;
the calculating unit is configured to set a brightness value of pixels covered by the metering pattern (100) of at least one selected metering position as an input value, and to perform calculation through a preset function to obtain an output value; and
the photographic apparatus captures the image based on the output value.

5. A photographing method, **characterized in that**, the photographic method comprising:
displaying an image (S1);
receiving a command indicating an operation on the displayed image (S2); and
selecting a metering position and/or a focusing position according to the received command (S3).

6. The photographing method of claim 5, wherein:
the command includes a command for selecting the metering position and/or a command for selecting the focusing operation; and
the step of selecting a metering position and/or a focusing position according to the received command further comprises:
selecting the metering position according to the received command for selecting the metering position; and
selecting the focusing position according to the received command for selecting the focusing position.

7. The photographing method of claim 5, wherein the number of the metering position is at least two, and/or the number of the focusing position is at least two.

8. The photographing method of claim 5, wherein the step of selecting a metering position and/ or a focusing position comprises:
dragging or clicking a displayed metering pattern (100) to select the metering position; and/ or
dragging or clicking a displayed focusing pattern (200) to select the focusing position.

9. The photographing method of claim 8, wherein a color of the metering pattern (100) is different from that of the focusing pattern (200); or a shape of the metering pattern (100) is different from that of the focusing pattern (200).

10. The photographing method of claim 8, further comprising:
setting a brightness value of pixels covered by the metering pattern (100) of at least one selected metering position as an input value,
performing calculation through a preset function to obtain an output value; and
capturing the image based on the output value.
